# EUROPÄISCHE PATENTSCHRIFT

(11) **EP 3 336 575 B1**
(45) Veröffentlichungstag und Bekanntmachung des Hinweises auf die Patenterteilung: **23.03.2022**
(21) Anmeldenummer: 17199614.3
(22) Anmeldetag: 02.11.2017
(51) Int. Cl.: G01S 7/03, G01S 13/93, H01Q 1/32, H01Q 1/40, H01Q 9/04

(54) **RADARSENSOR FÜR EIN KRAFTFAHRZEUG MIT EINEM IN EIN RADOM INTEGRIERTES ANTENNENELEMENT, FAHRERASSISTENZSYSTEM SOWIE KRAFTFAHRZEUG**
RADAR SENSOR FOR A MOTOR VEHICLE WITH AN ANTENNA ELEMENT EMBEDDED IN A RADOME, DRIVER ASSISTANCE SYSTEM AND MOTOR VEHICLE
CAPTEUR RADAR POUR UN VÉHICULE AUTOMOBILE DOTÉ D'UN ÉLÉMENT D'ANTENNE INTÉGRÉ DANS UN RADÔME, SYSTÈME D'AIDE À LA CONDUITE AINSI QUE VÉHICULE AUTOMOBILE

(30) Priorität: 18.11.2016 DE 102016122189
(43) Veröffentlichungstag der Anmeldung: 20.06.2018
(73) Patentinhaber: Valeo Schalter und Sensoren GmbH, 74321 Bietigheim-Bissingen (DE)
(72) Erfinder: Papziner, Uwe, 74321 Bietigheim-Bissingen (DE); Lang, Harald, 74321 Bietigheim-Bissingen (DE); Kunce, Henryk, 74321 Bietigheim-Bissingen (DE)
(74) Vertreter: Withopf, Kristina

(56) Entgegenhaltungen:
- EP-A1- 0 587 247
- EP-A1- 0 838 693
- EP-A1- 1 411 583
- EP-B1- 0 587 247
- EP-B1- 0 838 693
- DE-T2- 60 106 405
- US-A1- 2011 254 739

## Beschreibung

Die vorliegende Erfindung betrifft einen Radarsensor für ein Kraftfahrzeug mit einem Radom und mit zumindest einem Antennenelement, wobei das Antennenelement dazu ausgelegt ist, ein erstes Radarsignal mit einer ersten Frequenz und ein zweites Radarsignal mit einer zweiten Frequenz durch das Radom hindurch auszusenden und/oder zu empfangen. Darüber hinaus betrifft die vorliegende Erfindung ein Fahrerassistenzsystem für ein Kraftfahrzeug. Schließlich betrifft die vorliegende Erfindung ein Kraftfahrzeug.

Das Interesse richtet sich vorliegend auf Radarsensoren für Kraftfahrzeuge. Diese Radarsensoren dienen im Allgemeinen zur Detektion eines Objekts beziehungsweise Hindernisses in einem Umgebungsbereich des Kraftfahrzeugs. Die Radarsensoren können Teil von unterschiedlichen Fahrerassistenzsystemen sein, die den Fahrer beim Führen des Kraftfahrzeugs unterstützen. Mit einem Radarsensor kann der Abstand zwischen dem Objekt und dem Kraftfahrzeug bestimmt werden. Des Weiteren kann mit dem Radarsensor auch die Relativgeschwindigkeit zwischen dem Kraftfahrzeug und dem Objekt bestimmt werden. Ferner kann der Radarsensor auch einen sogenannten Zielwinkel, also einen Winkel zwischen einer gedachten Verbindungslinie zu dem Objekt und einer Referenzlinie, beispielsweise der Fahrzeuglängsachse, bestimmen.

Die Radarsensoren können beispielsweise hinter den Stoßfängern des Kraftfahrzeugs angeordnet werden. Zur Detektion des Objekts sendet der Radarsensor ein Radarsignal in Form einer elektromagnetischen Welle aus. Dieses Radarsignal wird dann von dem zu detektierenden Objekt reflektiert und wird wieder von dem Radarsensor als Echo empfangen. Zum Aussenden des Radarsignals und/oder zum Empfangen des von dem Objekt reflektierten Radarsignals weist der Radarsensor zumindest ein Antennenelement auf. Ferner weisen die Radarsensoren zum Schutz vor Umwelteinflüssen ein entsprechendes Gehäuse auf. Dieses Gehäuse weist ein Gehäuseteil auf, durch welches die elektromagnetische Strahlung hindurch ausgesendet wird und durch welches hindurch die von dem Objekt reflektierte elektromagnetische Strahlung mit dem Antennenelement empfangen wird. Dieser Gehäuseteil wird üblicherweise als Radom bezeichnet.

Das Interesse richtet sich vorliegend insbesondere auf Radarsensoren, welche als Dual-Band-Radarsensoren ausgebildet sind. Dies bedeutet, dass die Radarsensoren mit einer ersten Frequenz, beispielsweise 77 GHz, und einer zweiten Frequenz, beispielsweise 79 GHz, betrieben werden können. Um den Radarsensor in diesen Frequenzbändern betreiben zu können, ist es notwendig, den Frequenzbereich zwischen 76 GHz und 81 GHz mit dem Antennendesign abzudecken. Hierzu ist es aus dem Stand der Technik bekannt, dass mehrlagige Hochfrequenzleiterplatinen zur Realisierung der Bandbreitenanforderung verwendet werden. Es wird also eine mehrlagige Leiterplatte bereitgestellt, welche jeweils die Hochfrequenzbauteile tragen. Die jeweiligen Leiterplatten können unterschiedliche Dicken aufweisen und entsprechend laminiert sein. Dies führt üblicherweise zu einem hohen Kostenaufwand.

Darüber hinaus sind aus dem Stand der Technik Antennen bekannt, welche einen dielektrischen Resonator umfassen. Hierzu beschreibt die DE 601 06 405 T2 eine Anordnung von dielektrischen Resonator-Antennenelementen. Dabei besteht jedes Antennenelement aus einem dielektrischen Resonator sowie einer Vielzahl von Speiseeinrichtungen zum Ein- beziehungsweise Auskoppeln von Energie. Dabei können die Antennenelemente auf einer Längsachse angeordnet sein. Die Speiseeinrichtungen des Antennenelements können einzeln oder in Kombination aktiviert werden, um einen inkrementalen oder kontinuierlich steuerbaren Strahl zu erzeugen. Die Elementstrahlen werden synchron zueinander gesteuert, wechselwirken miteinander und bilden einen Gesamtstrahl der Anordnung, der synchron zu den Elementstrahlen gesteuert wird. In EP 1 411 583 A1, EP 0 587 247 A1 und EP 0 838 693 A1 werden ebenfalls dielektrische Resonatorantennen beschrieben. Ein Radarsensor wird in US 2011/254739 A1 beschrieben.

Es ist Aufgabe der vorliegenden Erfindung, eine Lösung aufzuzeigen, wie ein Radarsensor für ein Kraftfahrzeug, der mit zwei unterschiedlichen Frequenzen betrieben werden kann, kostengünstiger bereitgestellt werden kann.

Diese Aufgabe wird erfindungsgemäß durch einen Radarsensor, durch ein Fahrerassistenzsystem sowie durch ein Kraftfahrzeug mit den Merkmalen gemäß den jeweiligen unabhängigen Ansprüchen gelöst. Vorteilhafte Weiterbildungen der vorliegenden Erfindung sind Gegenstand der abhängigen Ansprüche.

Ein erfindungsgemäßer Radarsensor für ein Kraftfahrzeug umfasst ein Radom. Darüber hinaus umfasst der Radarsensor zumindest ein Antennenelement, wobei das Antennenelement dazu ausgelegt ist, ein erstes Radarsignal mit einer ersten Frequenz und ein zweites Radarsignal mit einer zweiten Frequenz durch das Radom hindurch auszusenden und/oder zu empfangen. Das zumindest eine Antennenelement umfasst einen dielektrischen Resonator und ein Teil des Radoms bildet den dielektrischen Resonator.

Der Radarsensor kann an einem Kraftfahrzeug angeordnet werden. Beispielsweise kann der Radarsensor hinter einem Stoßfänger des Kraftfahrzeugs im Bereich der Ecken des Kraftfahrzeugs angeordnet werden. Mit dem Radarsensor kann ein Objekt beziehungsweise ein Hindernis in dem Umgebungsbereich des Kraftfahrzeugs erfasst werden. Der Radarsensor kann beispielsweise Teil eines Fahrerassistenzsystems des Kraftfahrzeugs sein, mit dem der Fahrer beim Führen des Kraftfahrzeugs unterstützt wird. Der Radarsensor weist zumindest ein Antennenelement auf, mit dem Radarsignale ausgesendet und/oder empfangen werden können. Dabei ist der Radarsensor als sogenannter Dual-Band-Radarsensor ausgebildet. Dies bedeutet, dass mit dem zumindest einen Antennenelement ein erstes Radarsignal mit einer ersten Frequenz, beispielsweise 77 GHz, und ein zweites Radarsignal mit einer zweiten Frequenz, beispielsweise 79 GHz, ausgesendet werden können. Alternativ oder zusätzlich können mit dem zumindest einen Antennenelement das erste Radarsignal und das zweite Radarsignal empfangen werden. Das erste Radarsignal kann elektromagnetische Strahlung in einem ersten Frequenzband beschreiben und das zweite Radarsignal kann elektromagnetische Strahlung in einem zweiten Frequenzband beschreiben.

Um ein Objekt in der Umgebung des Kraftfahrzeugs erkennen beziehungsweise detektieren zu können, kann mit dem Radarsensor das erste und/oder das zweite Radarsignal ausgesendet werden. Dieses Radarsignal trifft dann auf das Objekt und wird von diesem reflektiert. Das reflektierte Radarsignal gelangt dann wieder zu dem Antennenelement des Radarsensors und wird von diesem empfangen. Anhand der Laufzeit zwischen dem Aussenden des Radarsignals und dem Empfangen des von dem Objekt reflektierten Radarsignals kann dann der Abstand zwischen dem Kraftfahrzeug und dem Objekt bestimmt werden. Ferner weist der Radarsensor das Radom auf, welches das zumindest eine Antennenelement abdeckt. Beispielsweise kann der Radarsensor ein Gehäuse aufweisen, wobei das Radom einen Teil des Gehäuses des Radarsensors bildet. Durch das Radom kann das erste und/oder das zweite Radarsignal mittels des zumindest einen Antennenelements hindurch ausgesendet werden. Alternativ oder zusätzlich kann das erste und/oder das zweite Radarsignal mittels des zumindest einen Antennenelements durch das Radom hindurch empfangen werden.

Gemäß einem wesentlichen Aspekt der vorliegenden Erfindung ist es vorgesehen, dass das zumindest eine Antennenelement einen dielektrischen Resonator aufweist. Mit anderen Worten kann das zumindest eine Antennenelement eine dielektrische Resonator-Antenne (DRA) umfassen. Der dielektrische Resonator kann ein Dielektrikum umfassen, welches bei entsprechender Anregung elektromagnetische Strahlung abgibt. Dabei ist der dielektrische Resonator derart ausgestaltet beziehungsweise dimensioniert, dass die von dem dielektrischen Resonator abgegebene elektromagnetische Strahlung die erste Frequenz des ersten Radarsignals und die zweite Frequenz des zweiten Radarsignals beinhaltet. Mit dem dielektrischen Resonator kann also eine breitbandige Abstrahlung ermöglicht werden, sodass das Antennenelement mit der ersten Frequenz und der zweiten Frequenz betrieben werden kann. Dabei ist es ferner vorgesehen, dass der dielektrische Resonator in das Radom integriert ist. Der dielektrische Resonator des zumindest einen Antennenelements ist also ein Teil des Radoms. Somit ist es beispielsweise nicht erforderlich, dass der dielektrische Resonator separat gefertigt wird und anschließend auf eine Leiterplatte des Radarsensors aufgebracht wird. Dadurch, dass mit dem dielektrischen Resonator das erste Radarsignal mit der ersten Frequenz und das zweite Radarsignal mit der zweiten Frequenz ausgesendet und/oder empfangen werden können, ist es außerdem nicht erforderlich, mindestens zwei Hochfrequenzsubstratlagen bei der Realisierung des Dual-Band-Radarsensors zu verwendenden. Somit kann der Radarsensor besonders kostengünstig bereitgestellt werden.

Das Radom und der dielektrische Resonator sind aus dem gleichen Material gebildet beziehungsweise gefertigt. Dies ermöglicht eine einfache und kostengünstige Herstellung des Radarsensors. Somit kann der dielektrische Resonator in das Design des Radoms integriert werden, sodass das abstrahlende Antennenelement Teil des Radoms ist. Auf diese Weise kann die Zeitdauer, welche für die Herstellung des Radarsensors benötigt wird, verringert werden.

Des Weiteren ist es vorgesehen, dass das Radom und der dielektrische Resonator einteilig ausgebildet sind. Beispielsweise kann sowohl das Radom als auch der dielektrische Resonator aus einem entsprechenden Kunststoff gefertigt sein. Somit kann das Radom und der dielektrische Resonator auf einfache und kostengünstige Weise mithilfe eines Spritzgussverfahrens hergestellt werden. Alternativ oder zusätzlich kann es vorgesehen sein, dass das Radom und der dielektrische Resonator mittels eines Fräsverfahrens hergestellt werden. Dies ermöglicht eine einfache Integration des dielektrischen Resonators in das Radom.

Weiterhin ist es vorteilhaft, wenn das Radom und der dielektrische Resonator aus einem Kunststoff gebildet sind, wobei eine relative Dielektrizitätskonstante des Kunststoffes größer als 3 ist. Beispielsweise können das Radom und der dielektrische Resonator aus einem Kunststoff gebildet sein, welcher zusätzlich Glasfasern umfasst. Insbesondere können das Radom und der dielektrische Resonator aus Polybutylenterephthalat mit einem Anteil von 30 % Glasfasern (PET GF30) gefertigt sein. Ein solches Material kann auf einfache und zuverlässige Weise mittels eines Spritzgussverfahrens verarbeitet werden. Bevorzugt ist es vorgesehen, dass der dielektrische Resonator quaderförmig ausgebildet ist. Der dielektrische Resonator ist insbesondere als dielektrischer Rechteckresonator ausgebildet.

Weiterhin weist das zumindest eine Antennenelement eine Schlitzantenne zum Speisen des dielektrischen Resonators auf. Mit anderen Worten ist der dielektrische Resonator schlitzgespeist. Der Radarsensor weist eine Leiterplatte beziehungsweise Platine auf, auf welcher die Schlitzantenne beziehungsweise ein Schlitz ausgebildet ist. Über diese Schlitzantenne kann dann die Energie in den dielektrischen Resonator eingekoppelt werden. Dies ermöglicht eine einfache und kostengünstige Herstellung des Antennenelements.

Der Radarsensor weist eine Leiterplatte auf, in welcher die Schlitzantenne ausgebildet ist, wobei auf der Leiterplatte eine Speiseleitung zur elektrischen Versorgung der Schlitzantenne angeordnet ist. Insbesondere ist es vorgesehen, dass der Radarsensor nur eine einzige Leiterplatte beziehungsweise Platine aufweist. Auf dieser Leiterplatte können die Hochfrequenzbauteile für das Antennenelement angeordnet sein.

Ferner kann auf der Leiterplatte eine Speiseleitung beziehungsweise eine Leiterbahn vorgesehen sein, über welche die Schlitzantenne beziehungsweise der Schlitz angeregt werden kann. Die Schlitzantenne beziehungsweise der Schlitz kann in die Leiterplatte eingebracht sein. Das Radom, in welches der dielektrische Resonator integriert ist, kann dann so auf der Leiterplatte angeordnet werden, dass die Schlitzantenne in dem dielektrischen Resonator einkoppeln kann. Damit ist es nicht mehr erforderlich, dass der dielektrische Resonator auf die Leiterplatte aufgebracht beziehungsweise aufgeklebt wird. Somit kann insbesondere bei der Verwendung von mehreren Antennenelementen Kosten bei der Herstellung reduziert werden.

Bevorzugt ist die erste Frequenz 77 GHz und die zweite Frequenz ist 79 GHz. Insbesondere ist die Antenne zum Betrieb in einem Frequenzbereich zwischen 76 GHz und 81 GHz ausgelegt. Durch diese Bandbreite von etwa 5 GHz kann der Betrieb des Radarsensors beziehungsweise des Antennenelements ermöglicht werden. Insbesondere ist das zumindest eine Antennenelement derart ausgebildet, dass ein Streuparameter beziehungsweise S-Parameter, insbesondere der S11-Parameter beziehungsweise der Eingangsreflexionsfaktor, des Antennenelements in dem Frequenzbereich zwischen 76 GHz und 81 GHz ein -15 dB-Limit oder -10 dB-Limit erreicht. Dies ermöglicht einen zuverlässigen Betrieb des Dual-Band-Radarsensors.

Des Weiteren ist es insbesondere vorgesehen, dass der Radarsensor eine Mehrzahl von Antennenelementen aufweist, welche in einer Reihe nebeneinander angeordnet sind. Dabei ist es ferner insbesondere vorgesehen, dass die Mehrzahl von Antennenelementen gleichphasig gespeist ist. Auf diese Weise kann eine Erhöhung des Antennengewinns ermöglicht werden. Des Weiteren kann eine Bündelung des Abstrahlverhaltens in einer vorbestimmten Richtung erreicht werden. Dabei ist es insbesondere vorgesehen, dass die Mehrzahl von Antennenelementen, die in einem Array angeordnet sind, in der bestimmungsgemäßen Einbaulage des Radarsensors an dem Kraftfahrzeug so angeordnet ist, dass eine Bündelung des Abstrahlverhaltens in der Elevationsrichtung erreicht wird. Auf diese Weise können Objekte in der Umgebung des Kraftfahrzeugs zuverlässig mithilfe des Radarsensors erfasst werden.

Darüber hinaus kann es vorgesehen sein, dass die Mehrzahl von Antennenelementen eine Sendeantenne und/oder eine Empfangsantenne des Radarsensors bilden. Die Sendeantenne dient zum Aussenden des ersten und/oder des zweiten Radarsignals und die Empfangsantenne die zum Empfangen des von einem Objekt reflektieren ersten und/oder zweiten Radarsignals.

Ein erfindungsgemäßes Fahrerassistenzsystem für ein Kraftfahrzeug umfasst einen erfindungsgemäßen Radarsensor. Grundsätzlich kann es auch vorgesehen sein, dass das Fahrerassistenzsystem mehrere Radarsensoren aufweist. Die Radarsensoren können Teil eines Fahrerassistenzsystems des Kraftfahrzeugs sein. Beispielsweise kann der zumindest eine Radarsensor Teil eines Abstandsregeltempomats, eines Systems zur Totwinkelüberwachung, eines Spurwechselassistenten, eines Systems für automatische Notbremsungen oder dergleichen sein.

Ein erfindungsgemäßes Kraftfahrzeug umfasst einen erfindungsgemäßen Radarsensor.

Das Kraftfahrzeug ist insbesondere als Personenkraftwagen ausgebildet. Die Radarsensoren des Fahrerassistenzsystems können beispielsweise verdeckt hinter den Stoßfängern des Kraftfahrzeugs angeordnet sein.

Die mit Bezug auf den erfindungsgemäßen Radarsensor vorgestellten bevorzugten Ausführungsformen und deren Vorteile gelten entsprechend für das erfindungsgemäße Fahrerassistenzsystem sowie für das erfindungsgemäße Kraftfahrzeug.

Weitere Merkmale der Erfindung ergeben sich aus den Ansprüchen, den Figuren und der Figurenbeschreibung.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem mit Radarsensoren umfasst;
- Fig. 2: einen Radarsensor gemäß einer ersten Ausführungsform in einer Perspektivansicht;
- Fig. 3: eine Detailansicht des Radarsensors von Fig. 2;
- Fig. 4: einen Dämpfungsparameter des Radarsensors gemäß Fig. 2 in Abhängigkeit von der Frequenz;
- Fig. 5: eine Abstrahlcharakteristik eines Antennenelements des Radarsensors gemäß Fig. 2 in Abhängigkeit vom Winkel;
- Fig. 6: einen Radarsensor gemäß einer weiteren Ausführungsform in einer Perspektivansicht;
- Fig. 7: eine Detailansicht des Radarsensors von Fig. 6;
- Fig. 8: einen Dämpfungsparameter des Radarsensors gemäß Fig. 6 in Abhängigkeit von der Frequenz;
- Fig. 9: eine Abstrahlcharakteristik des Radarsensors gemäß Fig. 6 in Abhängigkeit vom Winkel;
- Fig. 10: einen Radarsensor gemäß einer weiteren Ausführungsform in einer Perspektivansicht; und
- Fig. 11: ein Radom des Radarsensors gemäß Fig. 10, in welches dielektrische Resonatoren integriert sind.

In den Figuren werden gleiche und funktionsgleiche Elemente mit den gleichen Bezugszeichen versehen.

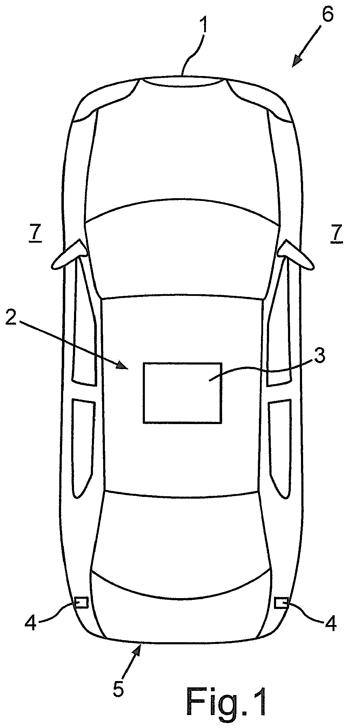

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2, welches beispielsweise als Abstandsregeltempomat, Totwinkelassistent, Spurhalteassistent und/oder Spurwechselassistent ausgebildet sein kann.

Das Fahrerassistenzsystem 2 umfasst zumindest einen Radarsensor 4, mit welchem ein Objekt in einem Umgebungsbereich 7 des Kraftfahrzeugs 1 erfasst werden kann. Vorliegend kann mit dem zumindest einen Radarsensor 4, ein Objekt, das in einem Umgebungsbereich 7 hinter dem Kraftfahrzeug 1 angeordnet ist, erfasst werden. Mit dem zumindest einen Radarsensor 4 kann ein Radarsignal ausgesendet werden, welches dann von dem Objekt reflektiert wird. Das reflektierte Radarsignal gelangt als Echosignal wieder zu dem Radarsensor 4 zurück. Anhand der Laufzeit zwischen dem Aussenden des Radarsignals und dem Empfangen des von dem Objekt reflektierten Radarsignals kann dann der Abstand zwischen dem Kraftfahrzeug 1 und dem Objekt bestimmt werden. Grundsätzlich kann der Radarsensor 4 in einem Frontbereich 6 und/oder einem Heckbereich 5 des Kraftfahrzeugs 1 angeordnet sein.

In dem vorliegenden Ausführungsbeispiel umfasst das Kraftfahrzeug 1 beziehungsweise das Fahrerassistenzsystem 2 zwei Radarsensoren 4, welche in dem Heckbereich 5 des Kraftfahrzeugs 1 angeordnet sind. Die Radarsensoren 4 können beispielsweise verdeckt hinter den Stoßfängern des Kraftfahrzeugs 1 angeordnet sein. Darüber hinaus umfasst das Kraftfahrzeug 1 beziehungsweise das Fahrerassistenzsystem 2 ein elektronisches Steuergerät 3, welches beispielsweise durch eine Recheneinrichtung, durch einen digitalen Signalprozessor oder dergleichen gebildet sein kann. Mithilfe des elektronischen Steuergeräts 3 können die Signale, die mit den Radarsensoren 4 bereitgestellt werden, ausgewertet werden.

Vorliegend ist es vorgesehen, dass die Radarsensoren 4 als sogenannte Dual-Band-Radarsensoren ausgebildet sind. Dies bedeutet, dass die Radarsensoren 4 ein erstes Radarsignal mit einer ersten Frequenz, insbesondere 77 GHz, und ein zweites Radarsignal mit einer zweiten Frequenz, insbesondere 79 GHz, aussenden und/oder empfangen können.

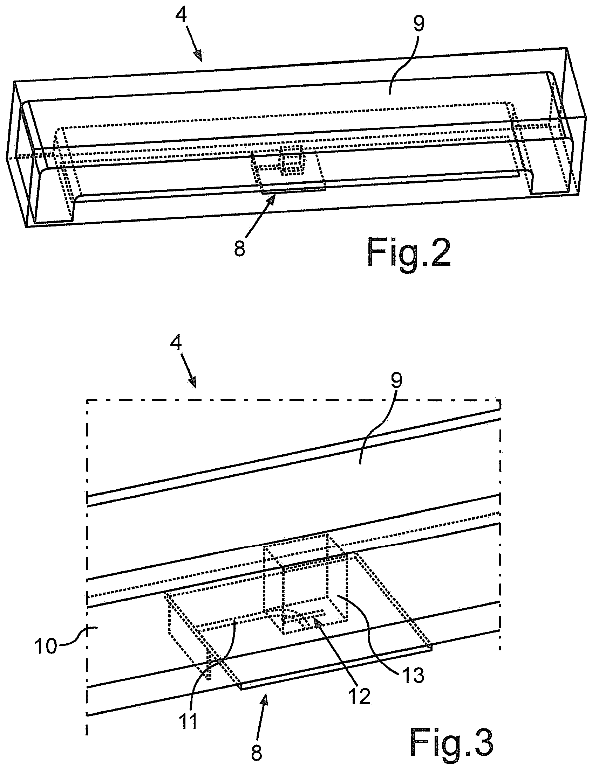

Fig. 2 zeigt einen Radarsensor 4 gemäß einer ersten Ausführungsform in einer Perspektivansicht. Der Radarsensor 4 umfasst ein Antennenelement 8, mit dem das erste Radarsignal und das zweite Radarsignal sowohl ausgesendet als auch empfangen werden können. Darüber hinaus umfasst der Radarsensor 4 ein Radom 9, welches beispielsweise einen Teil des Gehäuses des Radarsensors 4 bilden kann. Dabei ist das Radom 9 derart ausgebildet beziehungsweise angeordnet, dass das Antennenelement 8 das erste und/oder das zweite Radarsignal durch das Radom 9 hindurch aussendet. Ferner kann das von dem Objekt reflektierte erste und/oder zweite Radarsignal durch das Radom 9 hindurch mittels des Antennenelements 8 empfangen werden.

Fig. 3 zeigt eine Detailansicht des Radarsensors 4 gemäß Fig. 2. Hierbei ist zu erkennen, dass der Radarsensor 4 eine Leiterplatte 10 beziehungsweise eine Platine aufweist. Die Leiterplatte 10 kann eine Hochfrequenz-Substratlage aufweisen. Auf dieser Leiterplatte 10 ist eine Speiseleitung 11 beziehungsweise eine Leiterbahn angeordnet. Ferner ist in die Leiterplatte 10 ein Schlitz eingebracht, welcher eine Schlitzantenne 12 bildet. Über die Speiseleitung 11 kann die Schlitzantenne 12 versorgt werden. Die Schlitzantenne 12 bildet einen Teil des Antennenelements 8. Darüber hinaus umfasst das Antennenelement 8 einen dielektrischen Resonator 13. Dieser dielektrische Resonator 13 ist aus einem Dielektrikum gebildet. Der dielektrische Resonator 13 kann aus einem Material gebildet sein, dessen Dielektrizitätskonstante größer als 3 ist. Vorliegend ist der dielektrische Resonator 13 quaderförmig ausgebildet. Der dielektrische Resonator 13 ist somit als dielektrischer Rechteckresonator ausgebildet. Dabei sind das Radom 9 und der dielektrische Resonator 13 aus dem gleichen Material gebildet. Beispielsweise können der dielektrische Resonator 13 und das Radom 9 aus dem Kunststoff PBT GF30 gebildet sein. Dabei ist es vorgesehen, dass der dielektrische Resonator 13 und das Radom 9 einteilig ausgebildet sind.

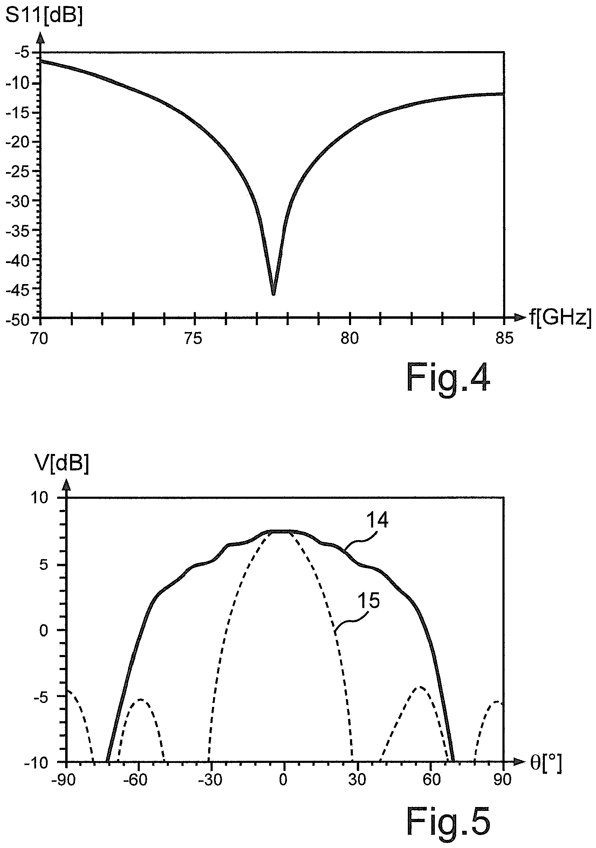

Fig. 4 zeigt den S11-Parameter beziehungsweise den Eingangsreflexionsfaktor des Antennenelements 8 in Abhängigkeit von der Frequenz f. Dabei ist zu erkennen, dass eine optimale Anpassung des Antennenelements 8 bei einer Frequenz von 77,5 GHz erreicht wird. Das -15 dB-Limit für die Bandbreite des S11-Parameters beträgt etwa 5,5 GHz. Somit umfasst diese Bandbreite den Frequenzbereich der beiden Radarbänder beziehungsweise die erste Frequenz des ersten Radarsignals (77 GHz) und die zweite Frequenz des zweiten Radarsignals (79 GHz).

Fig. 5 zeigt die Abstrahlcharakteristik des Antennenelements 8 des Radarsensors 4 gemäß Fig. 2. Dabei ist die Verstärkung V in Abhängigkeit von dem Winkel θ dargestellt. Der Winkel θ beschreibt die azimutale Leistungsverteilung. Weiter beschreibt die Kurve 14 die Verteilung der Leistung V in azimutaler Richtung und die Kurve 15 beschreibt die Verteilung der Leistung V in Elevationsrichtung. Die Kurve 14 zeigt eine verhältnismäßig gleichmäßige Abstrahlung in azimutaler Richtung. Die Kurve 15 zeigt eine deutliche Nebenkeulenunterdrückung in Elevationsrichtung.

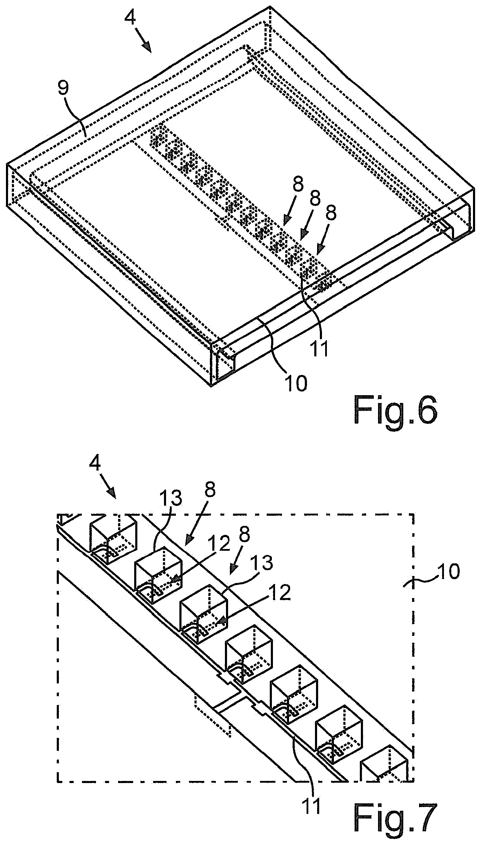

Fig. 6 zeigt einen Radarsensor 4 gemäß einer weiteren Ausführungsform in einer Perspektivansicht. Hierbei ist zu erkennen, dass der Radarsensor 4 eine Mehrzahl von Antennenelementen 8 aufweist, welche in einem Array angeordnet sind. Vorliegend sind zwölf Antennenelemente 8 entlang einer Linie angeordnet. Hiermit kann der Antennengewinn erhöht werden und das Abstrahlverhalten in der Elevationsrichtung gebündelt werden. Dabei werden die einzelnen Antennenelemente 8 über die Speiseleitung 11 beziehungsweise ein Feednetzwerk gleichphasig gespeist. Fig. 7 zeigt eine Detailansicht des Radarsensors 4 gemäß Fig. 6.

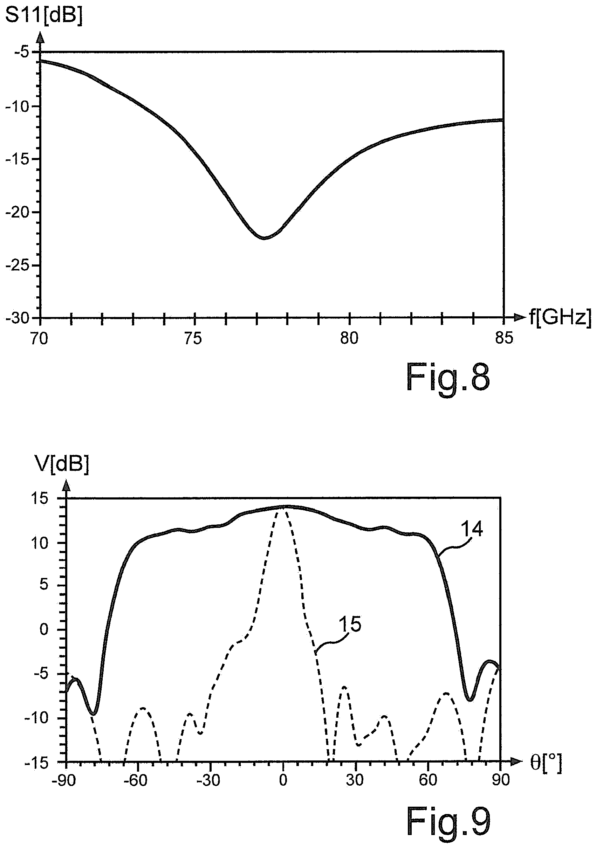

Fig. 8 zeigt den S11-Parameter des Radarsensors 4 gemäß Fig. 6 in Abhängigkeit von der Frequenz f. Die optimale Anpassung wird hier bei einer Frequenz f von 77,3 GHz erreicht. Die -10dB-Bandgrenzen für den S11-Parameter liegen zwischen 73,4 GHz und 83,0 GHz. Damit wird mit dem Antennendesign der schlitzgekoppelten dielektrische Resonator-Antenne, welche in das Radom 9 integriert ist, eine Antennenbandbreite erzielt, welche beide Radarfrequenzen umfasst.

Fig. 9 zeigt die Abstrahlcharakteristik des Radarsensors 4 gemäß Fig. 6. Hierbei ist anhand der Kurve 15 zu erkennen, dass durch das Array aus Antennenelementen 8 eine Bündelung in Elevationsrichtung mit hoher Nebenkeulenunterdrückung erreicht wird. Die azimutale Schnittebene zeigt eine verhältnismäßig gleichmäßige Abstrahlung für einen Sektor zwischen θ = -60° und θ = +60° in horizontaler Richtung. Dies ist anhand d er Kurve 14 zu erkennen.

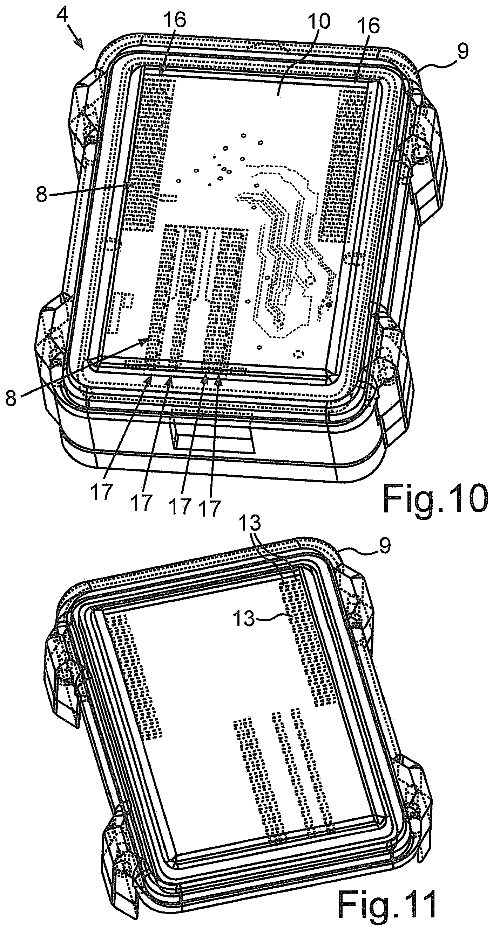

Fig. 10 zeigt einen Radarsensor 4 gemäß einer weiteren Ausführungsform in einer Perspektivansicht. Der Radarsensor 4 weist Sendeantennen 16 sowie Empfangsantennen 17 auf. Dabei weist jede Sendeantenne 16 zwei Reihen aus Antennenelementen 8 auf. Ferner sind vier Reihen von Antennenelementen 8 als Empfangsantennen 17 vorgesehen.

Fig. 11 zeigt das Radom 9 des Radarsensors 4, in welches die dielektrischen Resonatoren 13 integriert sind. Hier ist zu erkennen, dass das Radom 9 und die dielektrischen Resonatoren 14 einteilig ausgebildet sind. Das Radom 9 mit den integrierten dielektrischen Resonatoren 13 kann beispielsweise mittels eines Spritzgussverfahrens und/oder eines Fräsverfahrens hergestellt werden.

## Patentansprüche

1. Radarsensor (4) für ein Kraftfahrzeug (1), mit einem Radom (9), einer Leiterplatte (10), und mit zumindest einem Antennenelement (8), wobei das Antennenelement (8) dazu ausgelegt ist, ein erstes Radarsignal mit einer ersten Frequenz und ein zweites Radarsignal mit einer zweiten Frequenz durch das Radom (8) hindurch auszusenden und/oder zu empfangen, wobei das zumindest eine Antennenelement (8) einen dielektrischen Resonator (13) umfasst, **dadurch gekennzeichnet, dass** ein Teil des Radoms (9) den dielektrischen Resonator (13) bildet, wobei das Radom (9) und der dielektrische Resonator (13) aus dem gleichen Material gebildet sind und einteilig ausgebildet sind, dass das zumindest eine Antennenelement (8) eine Schlitzantenne (12) zum Speisen des dielektrischen Resonators (13) aufweist, wobei in der Leiterplatte (10) die Schlitzantenne (12) ausgebildet ist, und dass auf der Leiterplatte (10) eine Speiseleitung (11) zur elektrischen Versorgung der Schlitzantenne (12) angeordnet ist.

2. Radarsensor (4) nach Anspruch 1,
**dadurch gekennzeichnet, dass**
das Radom (9) und der dielektrische Resonator (13) aus einem Kunststoff gebildet sind, wobei eine relative Dielektrizitätskonstante des Kunststoffs größer als 3 ist.

3. Radarsensor (4) nach einem der vorhergehenden Ansprüche,
**dadurch gekennzeichnet, dass**
die erste Frequenz 77 GHz ist und die zweite Frequenz 79 GHz ist.

4. Radarsensor (4) nach einem der vorhergehenden Ansprüche,
**dadurch gekennzeichnet, dass**
die Antenne zum Betrieb in einem Frequenzbereich zwischen 76 GHz und 81 GHz ausgelegt ist.

5. Radarsensor (4) nach einem der vorhergehenden Ansprüche,
**dadurch gekennzeichnet, dass**
der Radarsensor (4) eine Mehrzahl von Antennenelementen (8) aufweist, welche in einer Reihe nebeneinander angeordnet sind.

6. Radarsensor (4) nach Anspruch 5,
**dadurch gekennzeichnet, dass**
die Mehrzahl von Antennenelementen (8) gleichphasig gespeist sind.

7. Radarsensor nach Anspruch 5 oder 6, **dadurch gekennzeichnet, dass** jedes Antennenelement (8) jeweils einen dielektrischen Resonator (13) umfasst.

8. Radarsensor (4) nach einem der vorhergehenden Ansprüche, **dadurch gekennzeichnet, dass** in die Leiterplatte (10) ein Schlitz eingebracht ist, welcher die Schlitzantenne (12) bildet.

9. Radarsensor (4) nach einem der vorhergehenden Ansprüche, **dadurch gekennzeichnet, dass** das Radom (9), in welches der dielektrische Resonator (13) integriert ist, so auf der Leiterplatte (10) angeordnet ist, dass die Schlitzantenne (12) in den dielektrischen Resonator (13) einkoppelt.

10. Radarsensor (4) nach einem der vorhergehenden Ansprüche, **dadurch gekennzeichnet, dass** der dielektrische Resonator (13) quaderförmig ausgebildet ist, so dass der dielektrische Resonator (13) als dielektrischer Rechteckresonator ausgebildet ist.

11. Fahrerassistenzsystem (2) für ein Kraftfahrzeug (1) mit einem Radarsensor (4) nach einem der vorhergehenden Ansprüche.

12. Kraftfahrzeug (1) mit einem Fahrerassistenzsystem (2) nach Anspruch 11.

## Claims

1. Radar sensor (4) for a motor vehicle (1), having a radome (9), a printed circuit board (10) and at least one antenna element (8), wherein the antenna element (8) is designed to emit and/or receive a first radar signal at a first frequency and a second radar signal at a second frequency through the radome (8), wherein the at least one antenna element (8) comprises a dielectric resonator (13), **characterized in that** a part of the radome (9) forms the dielectric resonator (13), wherein the radome (9) and the dielectric resonator (13) are formed from the same material and are designed in one part, **in that** the at least one antenna element (8) has a slot antenna (12) for supplying the dielectric resonator (13), wherein the slot antenna (12) is formed in the printed circuit board (10), and **in that** a supply line (11) for electrically supplying the slot antenna (12) is arranged on the printed circuit board (10).

2. Radar sensor (4) according to Claim 1,
**characterized in that**
the radome (9) and the dielectric resonator (13) are formed from a plastic, wherein a relative dielectric constant of the plastic is greater than 3.

3. Radar sensor (4) according to one of the preceding claims,
**characterized in that**
the first frequency is 77 GHz and the second frequency is 79 GHz.

4. Radar sensor (4) according to one of the preceding claims,
**characterized in that**
the antenna is designed to operate in a frequency range between 76 GHz and 81 GHz.

5. Radar sensor (4) according to one of the preceding claims,
**characterized in that**
the radar sensor (4) has a plurality of antenna elements (8) which are arranged in a row beside one another.

6. Radar sensor (4) according to Claim 5,
**characterized in that**
the plurality of antenna elements (8) are supplied in phase.

7. Radar sensor according to Claim 5 or 6,
**characterized in that**
each antenna element (8) respectively comprises a dielectric resonator (13).

8. Radar sensor (4) according to one of the preceding claims,
**characterized in that**
a slot is made in the printed circuit board (10) and forms the slot antenna (12).

9. Radar sensor (4) according to one of the preceding claims,
**characterized in that**
the radome (9), in which the dielectric resonator (13) is integrated, is arranged on the printed circuit board (10) in such a manner that the slot antenna (12) couples into the dielectric resonator (13).

10. Radar sensor (4) according to one of the preceding claims,
**characterized in that**
the dielectric resonator (13) is cuboidal, with the result that the dielectric resonator (13) is in the form of a dielectric rectangular resonator.

11. Driver assistance system (2) for a motor vehicle (1), having a radar sensor (4) according to one of the preceding claims.

12. Motor vehicle (1) having a driver assistance system (2) according to Claim 11.

## Revendications

1. Capteur radar (4) pour un véhicule automobile (1), comprenant un radôme (9), une carte de circuits imprimés (10) et mit au moins un élément d'antenne (8), l'élément d'antenne (8) étant conçu pour émettre et/ou recevoir à travers le radôme (8) un premier signal radar à une première fréquence et un deuxième signal radar à une deuxième fréquence, ledit au moins un élément d'antenne (8) comprenant un résonateur diélectrique (13),
**caractérisé en ce qu'**une partie du radôme (9) constitue le résonateur diélectrique (13), le radôme (9) et le résonateur diélectrique (13) étant formés du même matériau et étant réalisés d'un seul tenant, **en ce que** ledit au moins un élément d'antenne (8) présente une antenne fendue (12) pour alimenter le résonateur diélectrique (13), l'antenne fendue (12) étant réalisée dans la carte de circuits imprimés (10), et **en ce qu'**une ligne d'alimentation (11) pour l'alimentation électrique de l'antenne fendue (12) est disposée sur la carte de circuits imprimés (10).

2. Capteur radar (4) selon la revendication 1, **caractérisé en ce que** le radôme (9) et le résonateur diélectrique (13) sont formés en matière plastique, une permittivité relative de la matière plastique étant supérieure à 3.

3. Capteur radar (4) selon l'une quelconque des revendications précédentes, **caractérisé en ce que** la première fréquence est de 77 GHz et la deuxième fréquence est de 79 GHz.

4. Capteur radar (4) selon l'une quelconque des revendications précédentes, **caractérisé en ce que** l'antenne est conçue pour fonctionner dans une plage de fréquence comprise entre 76 GHz et 81 GHz.

5. Capteur radar (4) selon l'une quelconque des revendications précédentes, **caractérisé en ce que** le capteur radar (4) présente une pluralité d'éléments d'antenne (8) qui sont disposés côte à côte dans une rangée.

6. Capteur radar (4) selon la revendication 5, **caractérisé en ce que** la pluralité d'éléments d'antenne (8) est alimentée en phase.

7. Capteur radar selon la revendication 5 ou 6, **caractérisé en ce que** chaque élément d'antenne (8) comprend respectivement un résonateur diélectrique (13) .

8. Capteur radar (4) selon l'une quelconque des revendications précédentes, **caractérisé en ce qu'**une fente qui constitue l'antenne fendue (12) est pratiquée dans la carte de circuits imprimés (10).

9. Capteur radar (4) selon l'une quelconque des revendications précédentes, **caractérisé en ce que** le radôme (9) dans lequel est intégré le résonateur diélectrique (13) est disposé sur la carte de circuits imprimés (10) de telle sorte que l'antenne fendue (12) injecte dans le résonateur diélectrique (13).

10. Capteur radar (4) selon l'une quelconque des revendications précédentes, **caractérisé en ce que** le résonateur diélectrique (13) est réalisé en forme de parallélépipède de sorte que le résonateur diélectrique (13) est réalisé sous la forme d'un résonateur diélectrique rectangulaire.

11. Système d'assistance au conducteur (2) pour un véhicule automobile (1) comprenant un capteur radar (4) selon l'une quelconque des revendications précédentes.

12. Véhicule automobile (1) comprenant un système d'assistance au conducteur (2) selon la revendication 11.
